# FASCICULE DE BREVET EUROPEEN

(11) **EP 3 670 325 B1**
(45) Date de publication et mention de la délivrance du brevet: **13.10.2021**
(21) Numéro de dépôt: 19215767.5
(22) Date de dépôt: 12.12.2019
(51) Int. Cl.: B64C 1/06

(54) **STRUCTURE D'UN FUSELAGE D'UN AERONEF PRESENTANT UN PANNEAU RENFORCE PAR UN TREILLIS**
STRUKTUR EINES LUFTFAHRZEUGRUMPFS, DIE EIN MIT GITTERGEWEBE VERSTÄRKTES PANEEL AUFWEIST
STRUCTURE OF A FUSELAGE OF AN AIRCRAFT WITH A MESH-REINFORCED PANEL

(30) Priorité: 18.12.2018 FR 1873174
(43) Date de publication de la demande: 24.06.2020
(73) Titulaire: AIRBUS OPERATIONS, 31060 Toulouse Cedex 9 (FR); Airbus Operations GmbH, 21129 Hamburg (DE)
(72) Inventeur: MIALHE, Christophe, 81370 Saint Sulpice (FR); DRESEL, Andreas, 21129 Hamburg (DE)
(74) Mandataire: Cabinet Le Guen Maillet

(56) Documents cités:
- EP-A1- 3 106 383
- EP-A1- 3 293 105
- DE-A1-102009 057 018
- DE-A1-102012 101 914
- GB-A- 2 196 923
- US-A- 4 086 378

## Description

### DOMAINE TECHNIQUE

La présente invention concerne une structure d'un fuselage d'un aéronef, un aéronef comportant un fuselage réalisé avec une telle structure, ainsi qu'un procédé pour réaliser une telle structure.

### ETAT DE LA TECHNIQUE ANTERIEURE

La structure d'un aéronef, en particulier au niveau du fuselage, comporte classiquement une pluralité de cadres, une peau et de nombreux raidisseurs. Chaque cadre prend globalement la forme d'un cercle et les cadres sont disposés les uns à la suite des autres le long de la direction longitudinale de l'aéronef. De nombreux raidisseurs sont fixés entre deux cadres voisins et la peau est fixée autour des cadres et aux raidisseurs. Une telle structure est divulguée dans le document GB 2196923 A dont deux longerons dans la partie inférieure du fuselage forment un caisson avec des cadres antérieurs et postérieurs. Les documents US4088378 A et DE102009057018 A1 divulguent des structures cylindriques pour un fuselage d'aéronef renforcées par des nervures diagonales. Les documents DE102012101914 A1, EP3293105 A1 et EP3106383 A1 divulguent d'autres structures de fuselages d'aéronefs.

Bien qu'une telle architecture donne de bons résultats, en particulier du point de vue de la résistance structurelle, il est souhaitable de trouver une structure différente qui soit au moins aussi résistante structurellement et surtout plus légère et moins onéreuse à produire.

### EXPOSE DE L'INVENTION

Un objet de la présente invention est de proposer une structure d'un fuselage d'aéronef qui soit résistante structurellement et plus légère que celle de l'état de la technique.

A cet effet, est proposée une structure d'un fuselage d'aéronef, ladite structure comportant :
- une peau présentant une face extérieure et une face intérieure usinée sous la forme d'un panneau renforcé par un treillis,
- une pluralité de cadres, chaque cadre prenant la forme de la section du fuselage et les cadres étant disposés les uns à la suite des autres le long d'une direction longitudinale X du fuselage, où le périmètre extérieur de chaque cadre est fixé à la face intérieure de la peau,
- une pluralité de longerons s'étendant parallèlement à la direction longitudinale X du fuselage, où chaque longeron s'étend à travers plusieurs cadres en les traversant au niveau d'une lumière prévue à cet effet dans chaque cadre et où chaque longeron est appliqué contre la face intérieure de la peau et y est fixé, et
- en partie haute et en partie basse du fuselage, un caisson de torsion qui s'étend parallèlement à la direction longitudinale X du fuselage, où chaque caisson de torsion comporte une plaque horizontale et des pattes qui fixent la plaque à la face intérieure de la peau.

La combinaison particulière de cette structure est légère tout en étant particulièrement résistante.

Avantageusement, à chaque intersection entre un cadre et un longeron, ces deux éléments sont fixés l'un à l'autre.

Selon un mode de réalisation particulier, le panneau renforcé par un treillis présente des premières nervures formant un premier panneau renforcé par un treillis et des deuxièmes nervures, où la hauteur des premières nervures perpendiculairement à la face intérieure est plus petite que la hauteur des deuxièmes nervures perpendiculairement à la face intérieure.

Selon un autre mode de réalisation particulier, le panneau renforcé par un treillis présente des premières nervures formant un panneau renforcé par un treillis et des deuxièmes nervures formant un deuxième panneau renforcé par un treillis, où la hauteur des premières nervures perpendiculairement à la face intérieure est plus petite que la hauteur des deuxièmes nervures perpendiculairement à la face intérieure.

Avantageusement, la peau est percée de trous pour des hublots et d'un passage pour une porte, un longeron est disposé au-dessus de la ligne de trous, un longeron est disposé au-dessous de la ligne de trous, un longeron est disposé au niveau du bord supérieur du passage, un longeron est disposé au niveau d'un plancher supérieur, et un longeron est disposé au niveau du plancher inférieur d'une soute.

Avantageusement, chaque cadre est constitué d'un profilé présentant une section fermée.

Avantageusement, la section fermée prend la forme d'un trapèze dont l'un des côtés parallèles est fixé à la peau.

Avantageusement, la structure comprend des triangles de soutènement, où chaque triangle de soutènement est constitué d'un élément monobloc avec un bord rectiligne s'étendant horizontalement, un autre bord rectiligne s'étendant verticalement et un bord courbé s'appliquant et se fixant contre un cadre.

L'invention propose également un aéronef comportant un fuselage constitué d'une structure selon l'une des variantes précédentes.

L'invention propose également un procédé de fabrication de la structure précédente, ledit procédé de fabrication comportant :
- une étape de fourniture au cours de laquelle une plaque métallique plane dont l'épaisseur est au moins égale à la plus grande hauteur des nervures du panneau renforcé par un treillis est fournie,
- une étape d'enroulement au cours de laquelle la plaque métallique est déformée pour prendre la forme courbe de la peau,
- une étape d'aplatissement au cours de laquelle la plaque métallique ainsi déformée est contrainte en position plane,
- une étape d'usinage au cours de laquelle la plaque métallique ainsi contrainte est usinée de manière à réaliser le panneau renforcé par un treillis,
- une étape de relâchement au cours de laquelle la plaque métallique est relâchée de manière à reprendre sa forme courbe et à former ainsi la peau,
- une étape de réalisation d'un module qui consiste à fixer les cadres les uns à côté des autres sur un gabarit de montage, et à appliquer et à fixer la peau précédemment réalisée contre le périmètre extérieur de chaque cadre ainsi fixé, et
- une étape d'assemblage au cours de laquelle différents modules ainsi réalisés sont disposés et fixés les uns à côté des autres avec les longerons et les caissons de torsion.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef selon l'invention,
[Fig. 2] est une vue en perspective d'une portion d'un fuselage comportant une structure selon l'invention,
[Fig. 3] est une vue en perspective de la partie haute du fuselage de la Fig. 2,
[Fig. 4] est une vue en perspective d'un exemple d'une portion d'une peau utilisée pour la structure selon l'invention,
[Fig. 5] est une vue en perspective d'une portion du fuselage de la Fig. 2,
[Fig. 6] est une représentation schématique d'un procédé de fabrication d'une peau utilisée pour la structure selon l'invention, et
[Fig. 7] est une vue de la section d'un exemple d'un longeron utilisé pour la structure selon l'invention.

### EXPOSE DETAILLE DE MODES DE REALISATION

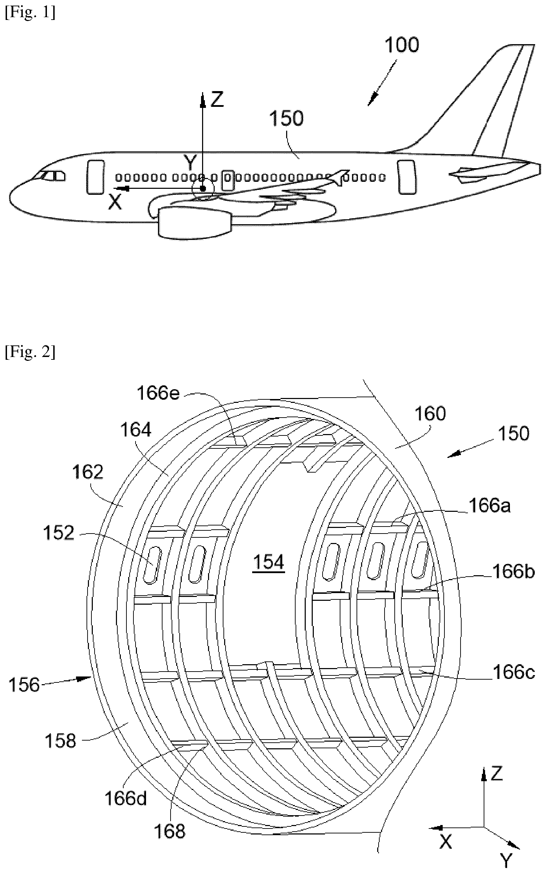

Dans la description qui suit, les termes relatifs à une position sont pris en référence à un aéronef en position normale d'utilisation, c'est-à-dire comme il est représenté sur la Fig. 1.

Dans la description qui suit, et par convention, on appelle X la direction longitudinale de l'aéronef et du fuselage orientée positivement dans le sens d'avancement de l'aéronef, on appelle Y la direction transversale de l'aéronef qui est horizontale lorsque l'aéronef est au sol, et Z la direction verticale lorsque l'aéronef est au sol, ces trois directions X, Y et Z étant orthogonales entre elles.

La Fig. 1 montre un aéronef 100 qui comporte un fuselage 150.

L'invention va être plus particulièrement décrite dans le cadre de la partie centrale et circulaire du fuselage 150, mais elle peut s'appliquer également lorsque le fuselage n'est pas circulaire ainsi qu'aux extrémités du fuselage 150.

La Fig. 2 montre le fuselage 150 qui est ici de forme circulaire. Le fuselage 150 comporte ici des trous 152 pour la mise en place des hublots et un passage 154 pour la mise en place d'une porte. Classiquement, le fuselage 150 est prévu pour comporter un plancher supérieur et une soute sous le plancher supérieur qui peut être un plancher passager ou cargo.

Le fuselage 150 est constitué d'une structure 156 qui comporte :
- une peau 158 présentant une face extérieure 160 orientée vers l'extérieur du fuselage 150 et une face intérieure 162 orientée vers l'intérieur du fuselage 150,
- une pluralité de cadres 164, chaque cadre 164 prenant la forme de la section du fuselage 150, ici circulaire, et les cadres 164 sont disposés les uns à la suite des autres le long de la direction longitudinale X du fuselage 150, et
- une pluralité de longerons 166a-e s'étendant parallèlement à la direction longitudinale X du fuselage 150.

La peau 158 est ainsi percée des trous 152 et du passage 154. Chaque cadre 164 peut être constitué d'un seul élément ou de plusieurs éléments fixés dans le prolongement les uns des autres.

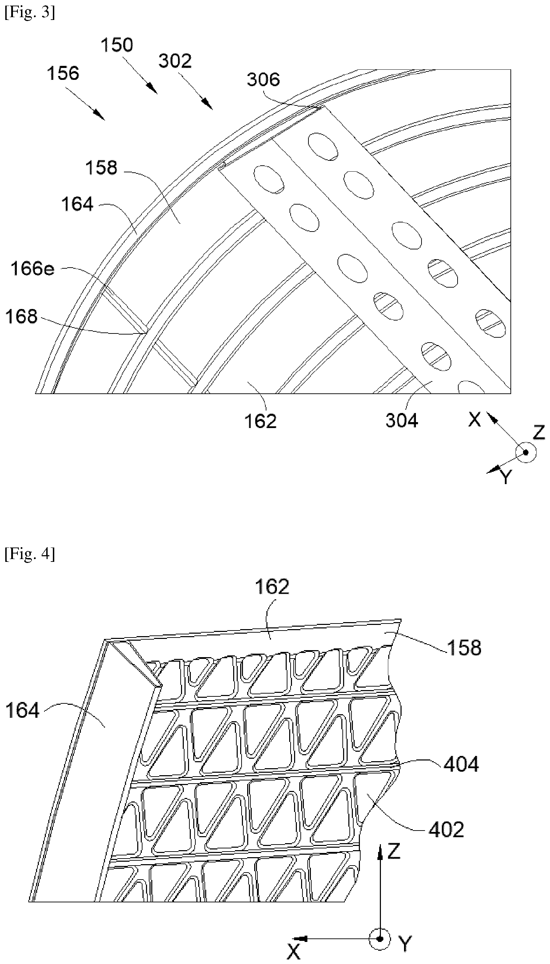

La Fig. 3 montre la partie haute du fuselage 150. La structure 156 comporte également en partie haute et en partie basse du fuselage 150, un caisson de torsion 302 qui s'étend parallèlement à la direction longitudinale X du fuselage 150.

La Fig. 4 montre la peau 158 et un cadre 164. La face intérieure 162 est usinée de manière à former un panneau renforcé par un treillis (« grid stiffened panel » en terminologie anglo-saxonne) qui assure un allégement de la peau 158 tout en assurant une bonne résistance. Ce panneau renforcé par un treillis permet la suppression des raidisseurs de l'état de la technique et ainsi un gain de poids.

Comme le montre la Fig. 4, le périmètre extérieur de chaque cadre 164 est fixé à la face intérieure 162 de la peau 158.

Comme le montrent la Fig. 2 et la Fig. 3, chaque longeron 166a-e s'étend à travers plusieurs cadres 164 en les traversant au niveau d'une lumière 168 prévue à cet effet dans chaque cadre 164. Chaque longeron 166a-e est appliqué contre la face intérieure 162 de la peau 158 et y est fixé.

Chaque caisson de torsion 302 comporte une plaque 304 qui s'étend dans un plan parallèle à l'axe longitudinal, ici horizontal. Chaque caisson de torsion 302 comporte également de part et d'autre du plan médian XZ du fuselage 150, des pattes 306 qui fixent la plaque 304 à la face intérieure 162 de la peau 158. Chaque caisson de torsion 302 constitue un élément qui peut compenser une défaillance de la peau 158 et inversement.

Chaque cadre 164 passe entre la plaque 304 et la peau 158.

L'architecture particulière de la structure 156 permet d'obtenir une structure plus légère que dans le cas de l'état de la technique par suppression des raidisseurs. Les caissons de torsion 302 permettent de compenser les efforts de flexion que le fuselage 150 subit. Les longerons 166a-e permettent un renfort de la structure 156 dans le cas de fortes charges. En outre, comme la raideur d'une telle structure est plus importante, il est possible d'espacer les cadres 164 et ainsi gagner encore en poids.

Selon un mode de réalisation préféré, à chaque intersection entre un cadre 164 et un longeron 166a-e, ces deux éléments sont fixés l'un à l'autre, c'est-à-dire au niveau de chaque lumière 168.

La fixation des différents éléments entre eux s'effectue par exemple par mise en place de rivets, de points de soudure, d'éléments de visserie ou de sertissage, etc.

Dans le mode de réalisation de la Fig. 4, le panneau renforcé par un treillis présente des premières nervures 402 formant un premier panneau renforcé par un treillis et des deuxièmes nervures 404, où la hauteur des premières nervures 402 perpendiculairement à la face intérieure 162 est plus petite que la hauteur des deuxièmes nervures 404 perpendiculairement à la face intérieure 162. Dans un mode de réalisation particulier, la hauteur des deuxièmes nervures 404 est égale à 5 mm, la hauteur des premières nervures 402 est égale à 3 mm et l'épaisseur de la peau 158 au centre des triangles est égale à 1,2 mm.

Dans le mode de réalisation de l'invention présenté à la Fig. 4, le treillis du premier panneau renforcé par un treillis est formé de triangles prenant ainsi la forme d'une isogrille, mais il est possible de prévoir d'autres formes fermées comme par exemple, rectangulaires, hexagonales, ou autres.

Les deuxièmes nervures 404 sont formées d'éléments droits, mais il est possible d'utiliser d'autres géométries en fonction des besoins structurels. Par exemple, en fonction du type d'efforts subis par la peau 158, l'orientation des éléments droits peut être différente.

Par exemple, la partie basse de la peau 158 va travailler en compression et une orientation longitudinale des éléments droits sera préférée. La partie haute de la peau 158 va travailler en traction et une double orientation longitudinale et transversale des éléments droits sera préférée. Entre la partie basse et la partie haute, la peau 158 va travailler en cisaillement et une orientation à 45° des éléments droits sera préférée.

Selon un autre mode de réalisation non représenté, les deuxièmes nervures forment également un deuxième panneau renforcé par un treillis, où le treillis est formé de triangles, ou d'autres formes fermées comme par exemple, rectangulaires, hexagonales, ou autres.

Selon un mode de réalisation particulier :
- un longeron 166a est disposé au-dessus de la ligne de trous 152 et un longeron 166b est disposé au-dessous de la ligne de trous 152,
- un longeron 166e est disposé au niveau du bord supérieur du passage 154, c'est-à-dire au niveau du linteau de la porte lorsqu'elle est installée,
- un longeron 166c est disposé au niveau du plancher supérieur pour soutenir le plancher supérieur en particulier en cas de crash, et
- un longeron 166d est disposé au niveau du plancher inférieur de la soute pour soutenir le plancher inférieur de la soute en particulier en cas de crash.

Bien sûr, selon la géométrie du fuselage 150 et selon les charges subies, une répartition différente, ainsi qu'un nombre différent de longerons sont possibles.

Le longeron 166a qui est disposé au-dessus de la ligne de trous 152 est positionné entre les trous 152 et le longeron 166e disposé au niveau du bord supérieur du passage 154. Le longeron 166b qui est disposé au-dessous de la ligne de trous 152 est positionné entre les trous 152 et le longeron 166c disposé au niveau du plancher supérieur.

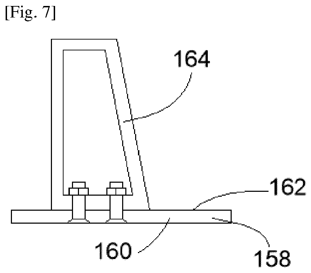

Comme le montrent la Fig. 4 et la Fig. 7, chaque cadre 164 est constitué d'un profilé présentant une section fermée ce qui permet d'obtenir un cadre auto-stable qui conserve sa forme même lorsqu'une force lui est appliquée. La section fermée prend ici la forme d'un trapèze dont l'un des côtés parallèles est fixé à la peau 158.

Pour alléger chaque cadre 164, des fenêtres peuvent être réalisées dans les parois dudit cadre 164.

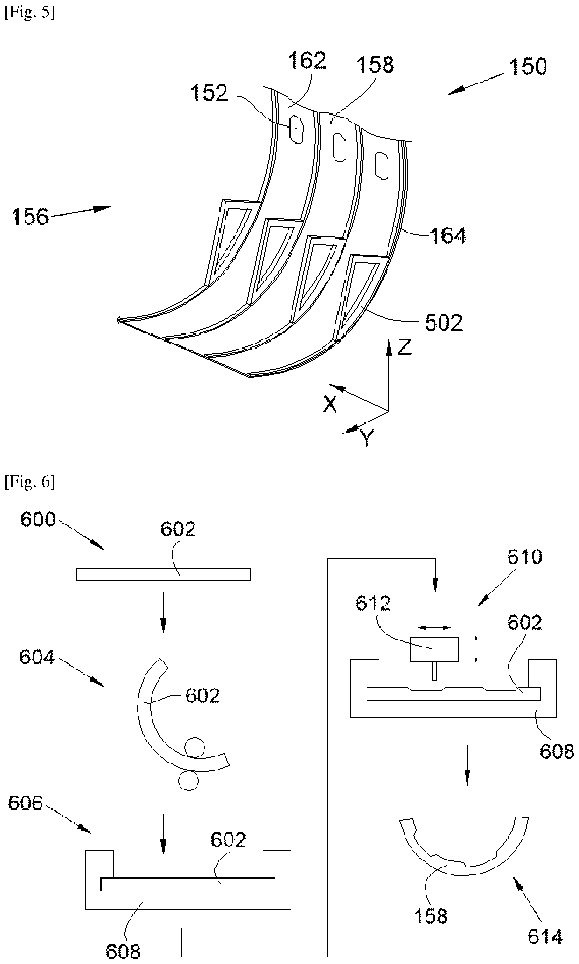

La Fig. 5 montre un mode de réalisation particulier dans lequel des triangles de soutènement 502 sont ajoutés pour soutenir le plancher supérieur. Chaque triangle de soutènement 502 est constitué d'un élément monobloc qui présente deux bords rectilignes et un bord courbé. Un des bords rectilignes est horizontal et sert de support au plancher supérieur, l'autre bord rectiligne s'étend verticalement et le bord courbé s'applique et se fixe contre un cadre 164.

Des poutrelles, en particulier des poutrelles auto-stables, peuvent être fixées entre deux triangles de soutènement 502 disposés de part et d'autre du plan médian XZ. Ces poutrelles permettent également la fixation des éléments d'aménagement de la cabine comme les sièges, les toilettes, etc.

La Fig. 6 montre un procédé de fabrication de la peau 158.

Le procédé de fabrication comporte :
- une étape de fourniture 600 au cours de laquelle une plaque métallique 602 plane dont l'épaisseur est au moins égale à la plus grande hauteur des nervures 402, 404 du panneau renforcé par un treillis est fournie,
- une étape d'enroulement 604 au cours de laquelle la plaque métallique 602 est déformée pour prendre la forme courbe de la peau 158,
- une étape d'aplatissement 606 au cours de laquelle la plaque métallique 602 ainsi déformée est contrainte en position plane,
- une étape d'usinage 610 au cours de laquelle la plaque métallique 602 ainsi contrainte est usinée de manière à réaliser le panneau renforcé par un treillis sur la face intérieure 162,
- une étape de relâchement 614 au cours de laquelle la plaque métallique 602 est relâchée de manière à reprendre sa forme courbe et à former ainsi la peau 158.

L'étape d'enroulement 604 s'effectue par exemple par passage entre des rouleaux.

L'étape d'aplatissement 606 est réalisée par exemple par mise en place de la plaque métallique 602 contre une table 608 contre laquelle deux bords rectilignes opposés de la plaque métallique 602 sont plaqués.

L'étape d'usinage 610 est réalisée à l'aide d'un outil 612 qui se déplace au-dessus de la table 608.

La réalisation de la structure 156 se poursuit alors par la réalisation d'un module qui consiste à fixer les cadres 164 les uns à côté des autres sur un gabarit de montage, et à appliquer et à fixer la peau 158 précédemment réalisée contre le périmètre extérieur de chaque cadre 164 ainsi fixé.

Au cours d'une étape d'assemblage, différents modules ainsi réalisés sont ensuite disposés et fixés les uns à côté des autres avec les longerons 166a-e et les caissons de torsion 302 de manière à former la structure 156.

## Revendications

1. Structure (156) d'un fuselage (150) d'aéronef (100), ladite structure (156) comportant
- une peau (158) présentant une face extérieure (160) et une face intérieure (162) usinée sous la forme d'un panneau renforcé par un treillis,
- une pluralité de cadres (164), chaque cadre (164) prenant la forme de la section du fuselage (150) et les cadres (164) étant disposés les uns à la suite des autres le long d'une direction longitudinale X du fuselage (150), où le périmètre extérieur de chaque cadre (164) est fixé à la face intérieure (162) de la peau (158),
- une pluralité de longerons (166a-e) s'étendant parallèlement à la direction longitudinale X du fuselage (150), où chaque longeron (166a-e) s'étend à travers plusieurs cadres (164) en les traversant au niveau d'une lumière (168) prévue à cet effet dans chaque cadre (164) et où chaque longeron (166a-e) est appliqué contre la face intérieure (162) de la peau (158) et y est fixé, et **caractérisée en ce que** ladite structure (156) comporte
- en partie haute et en partie basse du fuselage (150), un caisson de torsion (302) qui s'étend parallèlement à la direction longitudinale X du fuselage (150), où chaque caisson de torsion (302) comporte une plaque (304) horizontale et des pattes (306) qui fixent la plaque (304) à la face intérieure (162) de la peau (158).

2. Structure (156) selon la revendication 1, **caractérisée en ce qu'**à chaque intersection entre un cadre (164) et un longeron (166a-e), ces deux éléments sont fixés l'un à l'autre.

3. Structure (156) selon l'une des revendications 1 ou 2, **caractérisée en ce que** le panneau renforcé par un treillis présente des premières nervures (402) formant un premier panneau renforcé par un treillis et des deuxièmes nervures (404), où la hauteur des premières nervures (402) perpendiculairement à la face intérieure (162) est plus petite que la hauteur des deuxièmes nervures (404) perpendiculairement à la face intérieure (162).

4. Structure (156) selon l'une des revendications 1 ou 2, **caractérisée en ce que** le panneau renforcé par un treillis présente des premières nervures (402) formant un panneau renforcé par un treillis et des deuxièmes nervures formant un deuxième panneau renforcé par un treillis, où la hauteur des premières nervures perpendiculairement à la face intérieure (162) est plus petite que la hauteur des deuxièmes nervures perpendiculairement à la face intérieure (162).

5. Structure (156) selon l'une des revendications 1 à 4, **caractérisée en ce que** la peau (158) est percée de trous (152) pour des hublots et d'un passage (154) pour une porte, **en ce qu'**un longeron (166a) est disposé au-dessus de la ligne de trous (152), **en ce qu'**un longeron (166b) est disposé au-dessous de la ligne de trous (152), **en ce qu'**un longeron (166e) est disposé au niveau du bord supérieur du passage (154), **en ce qu'**un longeron (166c) est disposé au niveau d'un plancher supérieur, et **en ce qu'**un longeron (166d) est disposé au niveau du plancher inférieur d'une soute.

6. Structure (156) selon l'une des revendications 1 à 5, **caractérisée en ce que** chaque cadre (164) est constitué d'un profilé présentant une section fermée.

7. Structure (156) selon la revendication 6, **caractérisée en ce que** la section fermée prend la forme d'un trapèze dont l'un des côtés parallèles est fixé à la peau (158).

8. Structure (156) selon l'une des revendications 1 à 7, **caractérisée en ce qu'**elle comprend des triangles de soutènement (502), où chaque triangle de soutènement (502) est constitué d'un élément monobloc avec un bord rectiligne s'étendant horizontalement, un autre bord rectiligne s'étendant verticalement et un bord courbé s'appliquant et se fixant contre un cadre (164).

9. Aéronef (100) comportant un fuselage (150) constitué d'une structure (156) selon l'une des revendications précédentes.

10. Procédé de fabrication d'une structure (156) selon la revendication 1, ledit procédé de fabrication comportant :
- une étape de fourniture (600) au cours de laquelle une plaque métallique (602) plane dont l'épaisseur est au moins égale à la plus grande hauteur des nervures (402, 404) du panneau renforcé par un treillis est fournie,
- une étape d'enroulement (604) au cours de laquelle la plaque métallique (602) est déformée pour prendre la forme courbe de la peau (158),
- une étape d'aplatissement (606) au cours de laquelle la plaque métallique (602) ainsi déformée est contrainte en position plane,
- une étape d'usinage (610) au cours de laquelle la plaque métallique (602) ainsi contrainte est usinée de manière à réaliser le panneau renforcé par un treillis,
- une étape de relâchement (614) au cours de laquelle la plaque métallique (602) est relâchée de manière à reprendre sa forme courbe et à former ainsi la peau (158),
- une étape de réalisation d'un module qui consiste à fixer les cadres (164) les uns à côté des autres sur un gabarit de montage, et à appliquer et à fixer la peau (158) précédemment réalisée contre le périmètre extérieur de chaque cadre (164) ainsi fixé, et
- une étape d'assemblage au cours de laquelle différents modules ainsi réalisés sont disposés et fixés les uns à côté des autres avec les longerons (166a-e) et les caissons de torsion (302).

## Patentansprüche

1. Struktur (156) eines Rumpfs (150) eines Luftfahrzeugs (100), wobei die Struktur (156) Folgendes aufweist:
- eine Haut (158) mit einer Außenfläche (160) und einer Innenfläche (162), die in Form eines gitterverstärkten Paneels gefertigt ist,
- mehrere Rahmen (164), wobei jeder Rahmen (164) die Form des Querschnitts des Rumpfes (150) annimmt und die Rahmen (164) entlang einer Längsrichtung X des Rumpfs (150) hintereinander angeordnet sind, wobei der Außenumfang jedes Rahmens (164) an der Innenfläche (162) der Haut (158) befestigt ist,
- mehrere Holme (166a-e), die sich parallel zur Längsrichtung X des Rumpfs (150) erstrecken, wobei sich jeder Holm (166a-e) durch mehrere Rahmen (164) erstreckt, indem er diese an einem in jedem Rahmen (164) dafür vorgesehenen Schlitz (168) durchquert und wobei jeder Holm (166a-e) an der Innenfläche (162) der Haut (158) anliegt und daran befestigt ist, und
**dadurch gekennzeichnet, dass** die Struktur (156) Folgendes aufweist:
- einen Torsionskasten (302) am oberen Teil und am unteren Teil des Rumpfs (150), der sich parallel zur Längsrichtung X des Rumpfs (150) erstreckt, wobei jeder Torsionskasten (302) eine horizontale Platte (304) und Laschen (306), die die Platte (304) an der Innenfläche (162) der Haut (158) befestigen, aufweist.

2. Struktur (156) nach Anspruch 1, **dadurch gekennzeichnet, dass** an jedem Schnittpunkt zwischen einem Rahmen (164) und einem Holm (166a-e) diese beiden Elemente aneinander befestigt sind.

3. Struktur (156) nach einem der Ansprüche 1 oder 2, **dadurch gekennzeichnet, dass** das gitterverstärkte Paneel erste Rippen (402), die ein erstes gitterverstärktes Paneel ausbilden, und zweite Rippen (404) aufweist, wobei die Höhe der ersten Rippen (402) senkrecht zur Innenfläche (162) kleiner als die Höhe der zweiten Rippen (404) senkrecht zur Innenfläche (162) ist.

4. Struktur (156) nach einem der Ansprüche 1 oder 2, **dadurch gekennzeichnet, dass** das gitterverstärkte Paneel erste Rippen (402), die ein gitterverstärktes Paneel ausbilden, und zweite Rippen, die ein zweites gitterverstärktes Paneel ausbilden, aufweist, wobei die Höhe der ersten Rippen senkrecht zur Innenfläche (162) kleiner als die Höhe der zweiten Rippen senkrecht zur Innenfläche (162) ist.

5. Struktur (156) nach einem der Ansprüche 1 bis 4, **dadurch gekennzeichnet, dass** die Haut (158) mit Löchern (152) für Fenster und einem Durchbruch (154) für eine Tür durchbrochen ist, dass oberhalb der Linie der Löcher (152) ein Holm (166a) angeordnet ist, dass unterhalb der Linie der Löcher (152) ein Holm (166b) angeordnet ist, dass im Bereich der oberen Kante des Durchbruchs (154) ein Holm (166e) angeordnet ist, dass im Bereich eines oberen Bodens ein Holm (166c) angeordnet ist und dass im Bereich des unteren Bodens eines Laderaums ein Holm (166d) angeordnet ist.

6. Struktur (156) nach einem der Ansprüche 1 bis 5, **dadurch gekennzeichnet, dass** jeder Rahmen (164) aus einem Profil mit einem geschlossenen Querschnitt gebildet ist.

7. Struktur (156) nach Anspruch 6, **dadurch gekennzeichnet, dass** der geschlossene Querschnitt die Form eines Trapezes annimmt, wobei eine seiner parallelen Seiten an der Haut (158) befestigt ist.

8. Struktur (156) nach einem der Ansprüche 1 bis 7, **dadurch gekennzeichnet, dass** sie Stützdreiecke (502) umfasst, wobei jedes Stützdreieck (502) aus einem einteiligen Element mit einer horizontal verlaufenden geraden Kante, einer weiteren vertikal verlaufenden geraden Kante und einer am Rahmen (164) anliegenden und befestigten gekrümmten Kante gebildet ist.

9. Luftfahrzeug (100), umfassend einen Rumpf (150), der aus einer Struktur (156) nach einem der vorangehenden Ansprüche gebildet ist.

10. Verfahren zur Herstellung einer Struktur (156) nach Anspruch 1, wobei das Herstellungsverfahren Folgendes umfasst:
- einen Bereitstellungsschritt (600), in dem eine flache Metallplatte (602) bereitgestellt wird, deren Dicke zumindest gleich der größten Höhe der Rippen (402, 404) des gitterverstärkten Paneels ist,
- einen Aufrollschritt (604), in dem die Metallplatte (602) so verformt wird, dass sie die gekrümmte Form der Haut (158) annimmt,
- einen Abflachungsschritt (606), in dem die so verformte Metallplatte (602) in eine flache Position gepresst wird,
- einen Bearbeitungsschritt (610), in dem die so gepresste Metallplatte (602) so bearbeitet wird, dass das gitterverstärkte Paneel hergestellt wird,
- einen Freigabeschritt (614), in dem die Metallplatte (602) freigegeben wird, so dass sie wieder ihre gekrümmte Form annimmt und so die Haut (158) ausbildet,
- einen Modulherstellungsschritt, der darin besteht, die Rahmen (164) nebeneinander auf einer Montagevorrichtung zu befestigen und die zuvor hergestellte Haut (158) am Außenumfang jedes so befestigten Rahmens (164) anzubringen und zu befestigen, und
- einen Montageschritt, in dem die so hergestellten Einzelmodule nebeneinander mit den Holmen (166a-e) und den Torsionskästen (302) angeordnet und befestigt werden.

## Claims

1. Structure (156) for a fuselage (150) of an aircraft (100), said structure (156) comprising:
- a skin (158) having an outer face (160) and an inner face (162) machined in the form of a grid-stiffened panel,
- a plurality of frames (164), each frame (164) taking the shape of the cross section of the fuselage (150) and the frames (164) being arranged one after the other along a longitudinal direction X of the fuselage (150), the outer perimeter of each frame (164) being secured to the inner face (162) of the skin (158),
- a plurality of stringers (166a-e) extending parallel to the longitudinal direction X of the fuselage (150), each stringer (166a-e) extending across multiple frames (164), passing through these at an opening (168) provided to that end in each frame (164), and each stringer (166a-e) being pressed against the inner face (162) of the skin (158) and secured thereto, and **characterized in that** said structure (156) comprises
- in the upper part and in the lower part of the fuselage (150), a torsion box (302) which extends parallel to the longitudinal direction X of the fuselage (150), each torsion box (302) comprising a horizontal plate (304) and tabs (306) which secure the plate (304) to the inner face (162) of the skin (158).

2. Structure (156) according to Claim 1, **characterized in that**, at each intersection between a frame (164) and a stringer (166a-e), these two elements are secured to one another.

3. Structure (156) according to one of Claims 1 or 2, **characterized in that** the grid-stiffened panel has first ribs (402) forming a first grid-stiffened panel and second ribs (404), the height of the first ribs (402) perpendicular to the inner face (162) being less than the height of the second ribs (404) perpendicular to the inner face (162).

4. Structure (156) according to one of Claims 1 or 2, **characterized in that** the grid-stiffened panel has first ribs (402) forming a grid-stiffened panel and second ribs forming a second grid-stiffened panel, the height of the first ribs perpendicular to the inner face (162) being less than the height of the second ribs perpendicular to the inner face (162).

5. Structure (156) according to one of Claims 1 to 4, **characterized in that** the skin (158) has created in it holes (152) for portholes and a passage (154) for a door, **in that** a stringer (166a) is arranged above the line of holes (152), **in that** a stringer (166b) is arranged below the line of holes (152), **in that** a stringer (166e) is arranged at the level of the upper edge of the passage (154), **in that** a stringer (166c) is arranged at the level of an upper floor, and **in that** a stringer (166d) is arranged at the level of the lower floor of a hold.

6. Structure (156) according to one of Claims 1 to 5, **characterized in that** each frame (164) is made of a closed-section profile.

7. Structure (156) according to Claim 6, **characterized in that** the closed section is in the form of a trapezium, of which one of the parallel sides is secured to the skin (158).

8. Structure (156) according to one of Claims 1 to 7, **characterized in that** it comprises support triangles (502), each support triangle (502) is made of a one-piece element with a straight edge extending horizontally, another straight edge extending vertically and a curved edge that is pressed against and secured to a frame (164).

9. Aircraft (100) comprising a fuselage (150) made of a structure (156) according to one of the preceding claims.

10. Method for producing a structure (156) according to Claim 1, said production method comprising:
- a supply step (600) in which a flat metal plate (602), the thickness of which is at least equal to the greatest height of the ribs (402, 404) of the grid-stiffened panel, is supplied,
- a rolling step (604) in which the metal plate (602) is deformed so as to adopt the curved shape of the skin (158),
- a flattening step (606) in which the metal plate (602) deformed in this manner is constrained in a flat position,
- a machining step (610) in which the metal plate (602) constrained in this manner is machined so as to create the grid-stiffened panel,
- a release step (614) in which the metal plate (602) is released so as to recover its curved shape and thus form the skin (158),
- a module creation step which consists in securing the frames (164) next to one another on an assembly template and applying and securing the previously created skin (158) to the outer perimeter of each frame (164) secured in this manner, and
- an assembly step in which various modules created in this manner are arranged and secured next to one another with the stringers (166a-e) and the torsion boxes (302).
